# EUROPEAN PATENT APPLICATION

(11) **EP 4 787 732 A1**
(43) Date of publication of application: **05.08.2026**
(21) Application number: 24872861.0
(22) Date of filing: 24.09.2024
(51) Int. Cl.: H04B 7/185, H04W 8/24, H04W 76/12, H04W 60/00

(54) **METHOD FOR PERFORMING STORE-AND-FORWARD**

(30) Priority: 27.09.2023 US 202363540668 P
(71) Applicant: LG ELECTRONICS INC., Yeongdeungpo-gu Seoul 07336 (KR)
(72) Inventor: KIM, Jaewoo, Seoul 06772 (KR); YOUN, Myungjune, Seoul 06772 (KR); KIM, Laeyoung, Seoul 06772 (KR)
(74) Representative: Plasseraud IP
(86) International application number: PCT/KR2024/014384
(87) International publication number: WO 2025/071153

(57) **Abstract**

An embodiment of the present disclosure provides a method for performing communication by a first satellite. The method comprises the steps of: receiving, from an AMF, information indicating that a UE supports S&F, and storing the information in a UE context; receiving data from the UE and storing same; and maintaining the UE context.

## Description

### TECHNICAL FIELD

The present specification relates to mobile communications.

### BACKGROUNDART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

The method of performing S&F operations when the satellite serving the terminal changes is an issue.

### DESCLOSURE

### TECHNICAL SOLUTION

The satellite maintains the UE context and transmits MO data when it later connects to the ground station.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show an example of a registration procedure to which implementations of the present disclosure is applied.
FIG. 8 illustrates an example of a basic satellite operation.
FIG. 9 illustrates an example of an S&F satellite operation.
FIG. 10 illustrates an example of a process of transitioning from an RRC inactive state to an RRC connected state.
FIG. 11 illustrates an example of a situation at time T1.
FIG. 12 illustrates an example of a situation at time T2.
FIG. 13 illustrates an example of a situation at time T3.
FIG. 14 illustrates an example of an Xn setup procedure according to an embodiment of the present specification.
FIG. 15 illustrates an example of an NG setup procedure according to an embodiment of the present specification.
FIG. 16 illustrates an example of a registration procedure according to an embodiment of the present specification.
FIG. 17 and FIG. 18 illustrate examples of an S&F procedure according to an embodiment of the present specification.
FIG. 19 shows the procedure of the first satellite according to disclosure of the present specification.
FIG. 20 shows the procedure of the AMF according to disclosure of the present specification.
FIG. 21 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

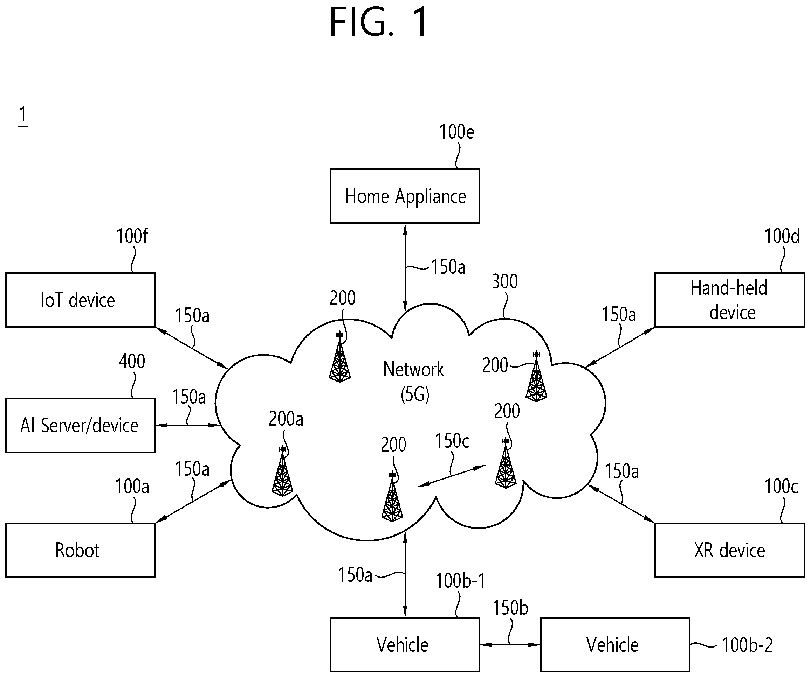

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

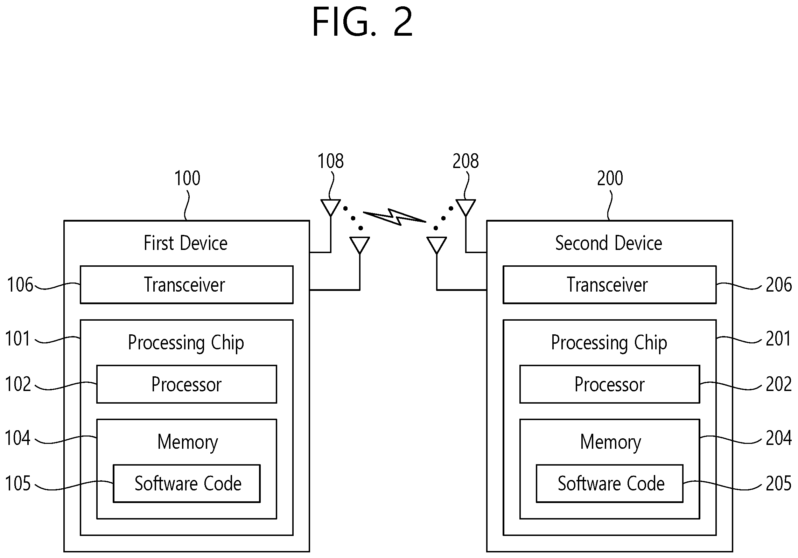

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

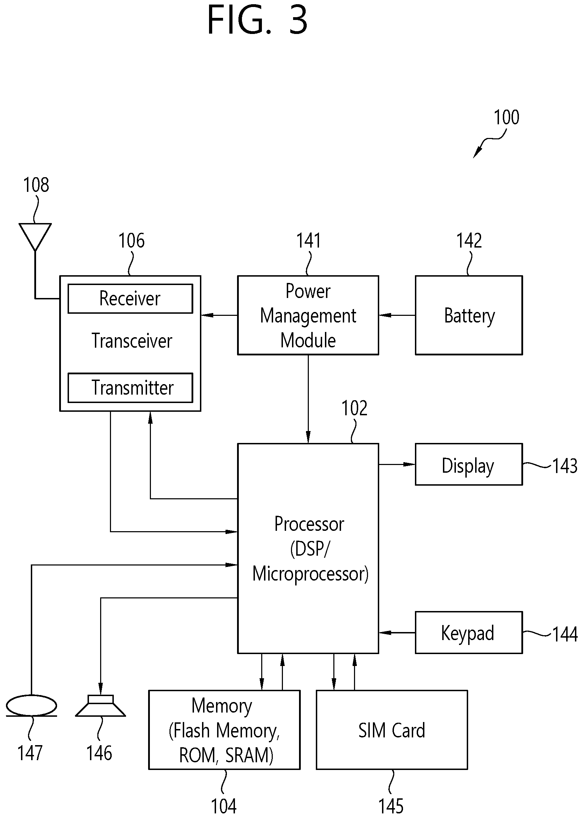

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

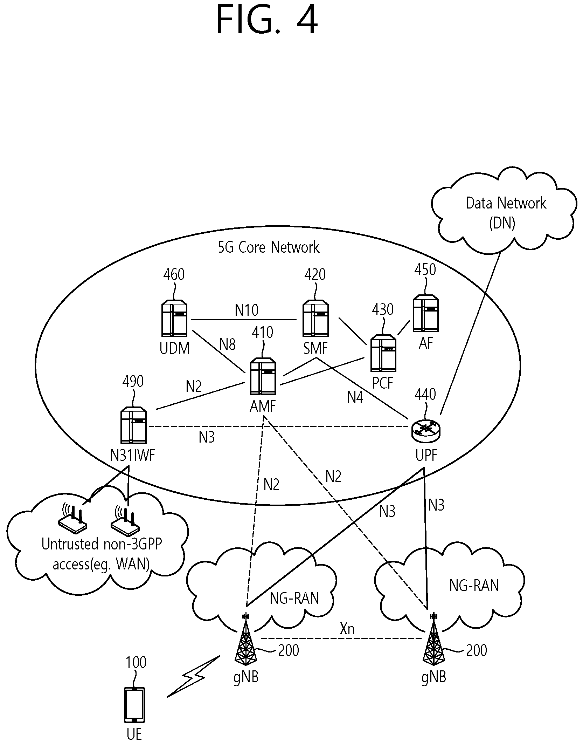

**FIG. 4** **is a block diagram of a next generation cellular network.**

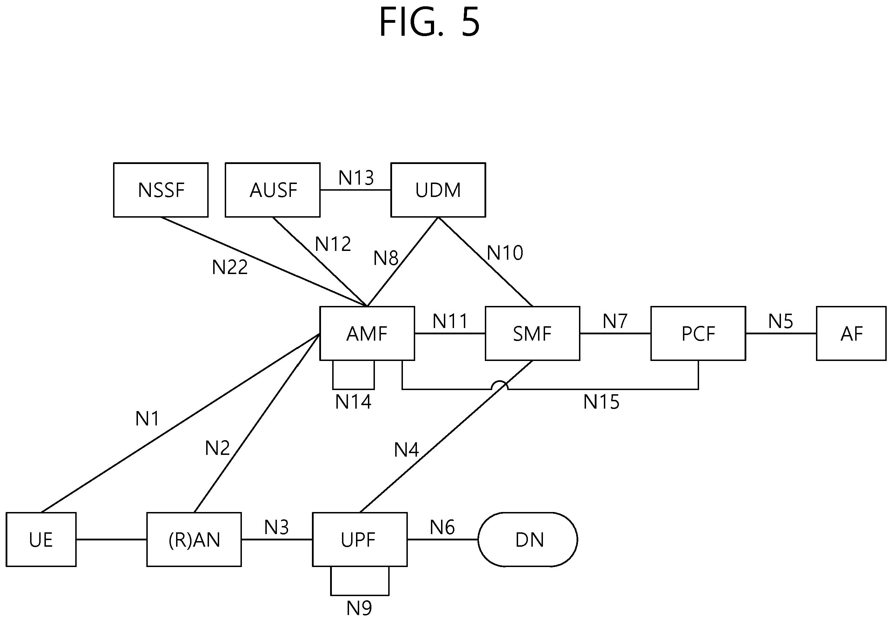

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Registration procedure>

A registration procedure is described. Section 4.2.2.2 of 3GPP TS 23.502 V16.3.0 (2019-12) can be referred.

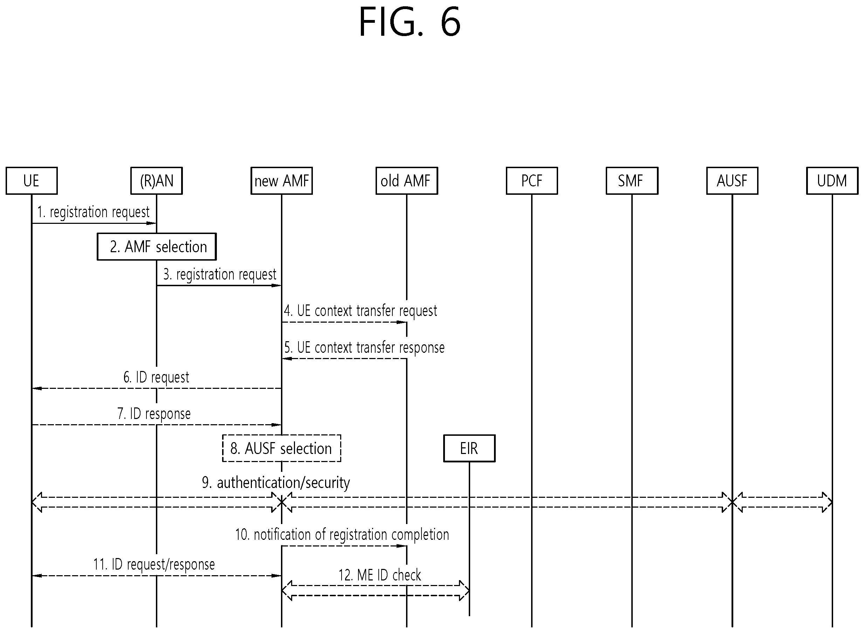

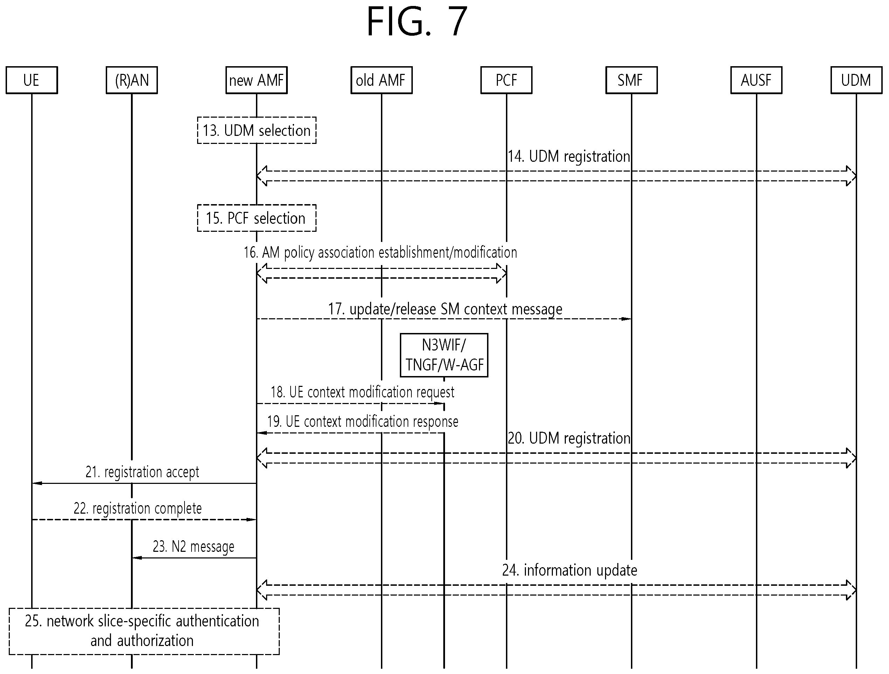

**FIGS. 6** **and** **7** **show an example of a registration procedure to which implementations of the present disclosure is applied.**

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

### < Non-Terrestrial Networks >

NTN (Non-Terrestrial Network) refers to a network or network segment using RF resources mounted on a satellite (or UAS platform).

There are two general scenarios of NTN providing access to user equipment: transparent payload and regenerative payload.

NTN is generally characterized by the following elements:
- One or multiple sat-gateways connecting the NTN to a public data network.
- A GEO satellite is supplied by one or multiple satellite gateways deployed across a satellite target range (e.g., regional or continental range). It is assumed that a UE in a cell is served by only one sat-gateway.
- A Non-GEO satellite served sequentially by one or multiple satellite gateways at a time. The system ensures service and feeder link continuity between successive serving satellite gateways with a sufficient time duration to proceed with mobility anchoring and handover.
- A feeder link or a radio link between a satellite gateway and a satellite (or UAS platform).
- A service link or a radio link between user equipment and a satellite (or UAS platform).
- A satellite (or UAS platform) capable of implementing a transparent or regenerative (including on-board processing) payload. A satellite (or UAS platform) typically generates multiple beams for a service area specified according to a field of view. The footprint of a beam is typically elliptical. The field of view of a satellite (or UAS platform) depends on an on-board antenna diagram and a minimum elevation angle.
- Transparent payload: Radio frequency filtering, frequency conversion, and amplification. Thus, a waveform signal repeated by the payload is not changed.
- Regenerative payload: Radio frequency filtering, frequency conversion, and amplification, demodulation/decoding, switching and/or routing, and coding/modulation. This is effectively equivalent to mounting all or part of a base station function (e.g., gNB) on a satellite (or UAS platform).
- Optionally, Inter-Satellite Links (ISL) in the case of satellite deployment. This requires a regenerative payload on the satellite. ISL may operate in RF frequencies or optical bands.
- User equipment is served by a satellite (or UAS platform) within a target service area.

In the case of a transparent satellite, the satellite amplifies a signal transmitted from a terrestrial base station (gNB-NTN gateway) and transmits the signal to a terminal. In the case of a regenerative satellite, functions of a terrestrial base station such as routing, coding, modulation, decoding, and demodulation are performed in addition to signal amplification. An NTN terminal has a GPS function and periodically receives location, time, and velocity information for an NTN satellite.

An S&F operation related to communication through a satellite is described.

### <S&F (Store and Forward)>

In a 5G system capable of satellite access, the S&F (Store and Forward) satellite operation is intended to provide delay-tolerant communication services to a UE that belongs to a satellite range and has intermittent/temporary satellite connectivity (e.g., a case where a satellite is not connected through a Feeder link or is not connected to a terrestrial network through an ISL).

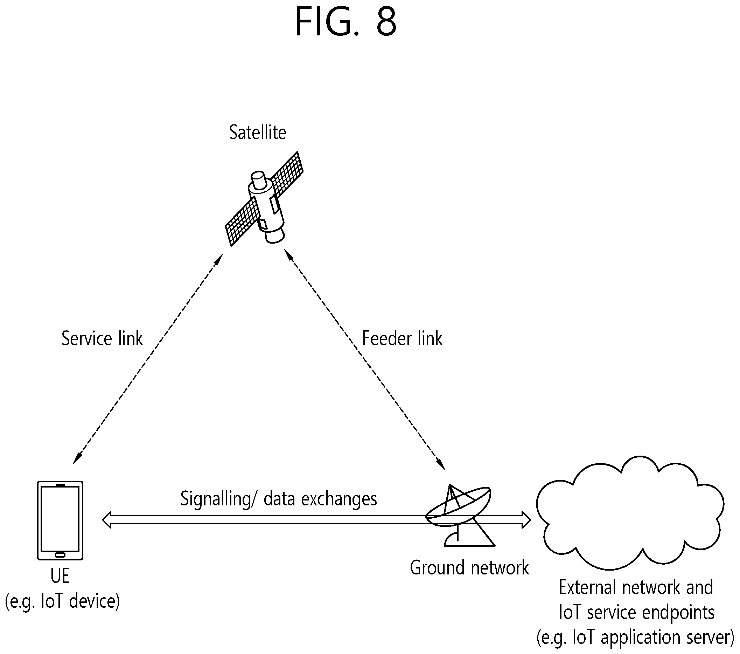

**FIG. 8** **illustrates an example of a basic satellite operation**.

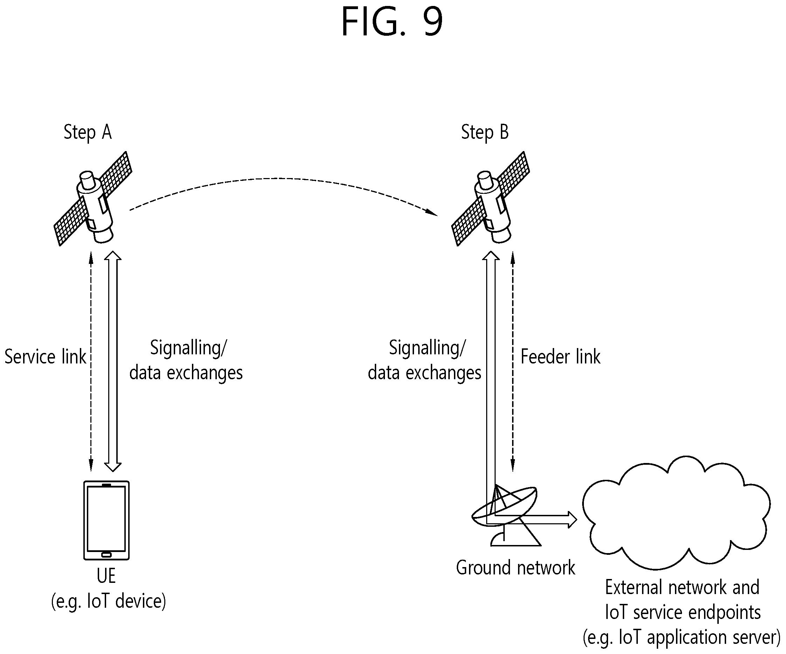

**FIG. 9** **illustrates an example of an S&F satellite operation.**

FIG. 8 and FIG. 9 illustrate examples of "S&F satellite operation" contrasted with current assumptions for "normal/basic satellite operation" of a 5G system capable of satellite access.

A service link is a link between a terminal and a satellite, and a feeder link may be a link between a satellite and a terrestrial gateway.
- For the exchange of signaling and data traffic between a UE with satellite access and a remote terrestrial network in a "normal/basic satellite operation" mode, a service link and a feeder link must be simultaneously active. Accordingly, there is a continuous end-to-end connection path between the UE, the satellite, and the terrestrial network at a time point when the UE interacts with the satellite through the service link.
- In contrast, in the "S&F satellite operation" mode, the end-to-end exchange of signaling/data traffic is now handled as a combination of two steps that are not simultaneous in time (step A and step B). In step A, signaling/data exchange between the UE and the satellite is performed. At this time, it may be performed even if the satellite is not simultaneously connected to the terrestrial network (e.g., the satellite may operate the service link without an active feeder link connection). In step B, a connection between the satellite and the terrestrial network is established so that communication between the satellite and the terrestrial network can occur. Accordingly, the satellite moves from a state connected to the UE in step A to a state connected to the terrestrial network in step B.

The concept of "S&F" service is widely used in the fields of delay-tolerant networking and disruption-tolerant networking. In the 3GPP context, a service that can be assimilated into the S&F service is SMS, in which case an end-to-end connection between endpoints is not required (e.g., an endpoint may be a UE and another endpoint may be an application server). However, a connection is required only between the endpoint and an SMSC serving as an intermediate node responsible for storage and reliance.

Support for S&F satellite operation may be particularly suitable for providing delay-tolerant/non-real-time IoT satellite services using NGSO satellites.

Transparent payloads and regenerative payloads are as follows:
- Transparent payload: Electromagnetic waves transmitted from the Earth's surface are converted into electrical signals through a satellite receiving antenna, and the signals are channel-filtered and amplified by a low-noise amplifier (LNA). Then, the signal is frequency-converted. A high-power amplifier (HPA) finally delivers the signal to a transmitting antenna to generate reproduced electromagnetic waves toward the Earth's surface where a receiving station is located.
- Regenerative payload: An on-board processor (OBP) is inserted between the LNA and the HPA. This OBP may convert the air interface between an uplink (from Earth to satellite) and a downlink (from satellite to Earth). This allows correcting erroneous bits or packets or routing packets between beams before retransmission. Ultimately, thanks to the OBP (including all functions connected to a gNB CU or DU or CN), all network functions may be implemented at the expense of power and mass.

In order to support the S&F function, a regenerative satellite (a satellite capable of performing the role of a terrestrial base station) may be required, rather than a transparent satellite that simply forwards the signal of the terminal.

When the satellite (or the terminal) moves and out of the coverage of the satellite after the terminal is connected to the 5GC through the satellite, the terminal transitions to a CM-IDLE (RRC_IDLE) state. Thereafter, when the terminal enters the coverage of the same satellite or another satellite, it must transition to a CM-CONNECTED (RRC_CONNECTED) state in order to transmit and receive signaling and data to and from the satellite.

In a case where only an NG-RAN is mounted on a satellite base station without mounting an additional core network function, an RRC_INACTIVE mode (RRC inactive state) may be used for the terminal to remain in the CM-CONNECTED state for communication.

While maintaining the CM-CONNECTED state with the core network, the terminal may use the RRC_INACTIVE mode with the base station managing terminal mobility. Then, when there is no data transmission/reception of the terminal, the terminal operates in the 'CM-CONNECTED with RRC_INACTIVE' mode, and when there is data transmission/reception, the terminal may transition to and operate in the RRC-CONNECTED (RRC connected state).

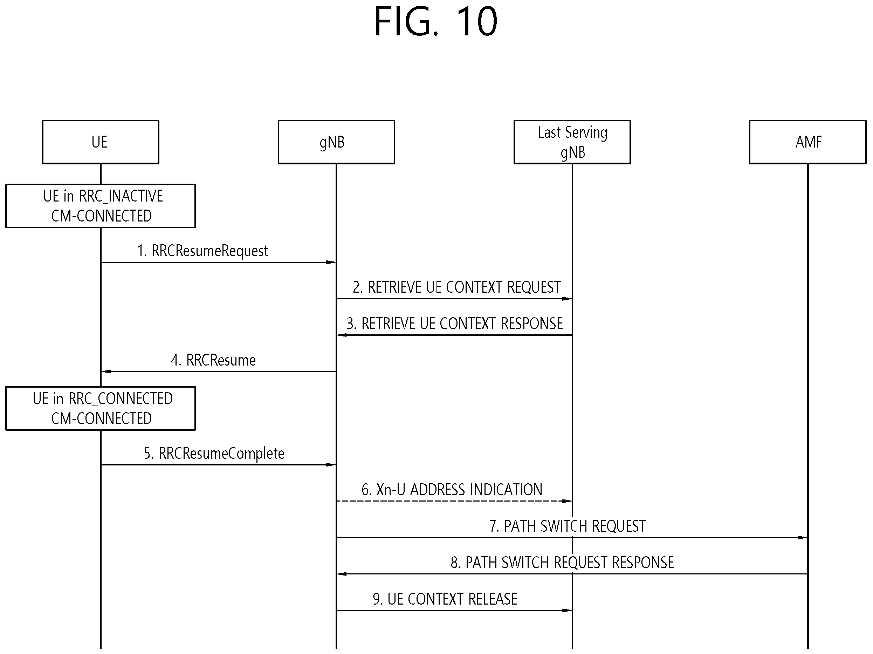

**FIG. 10** **illustrates an example of a process of transitioning from an RRC inactive state to an RRC connected state.**

In a general terrestrial network, for a terminal in the RRC inactive state to establish an RRC connection with a new base station, the terminal includes Inactive Radio Network Temporary Identifier (I-RNTI) information allocated from a base station that last served the terminal when sending an RRCResumeRequest.

The new base station receiving the RRCResumeRequest retrieves UE context information from the base station that last served the corresponding terminal, based on the ID of the base station included in the I-RNTI.

The new base station transmits a 'RETRIEVE UE CONTEXT REQUEST' to request the UE context from the previous serving base station. Then, the previous serving base station transmits a 'RETRIEVE UE CONTEXT RESPONSE' including the UE context to the new base station.

Based on this, the new base station transmits RRCResume to the terminal, and the terminal transitions to the RRC connected state.

After the new base station retrieves the UE context from the previous serving base station, the new base station transmits a UE CONTEXT RELEASE message. Then, the previous serving base station deletes the UE context.

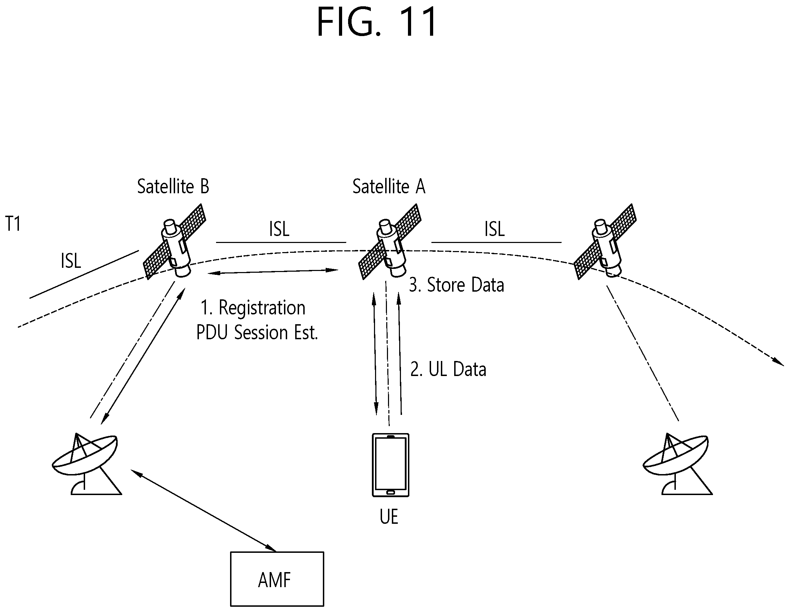

**FIG. 11** **illustrates an example of a situation at time T1.**

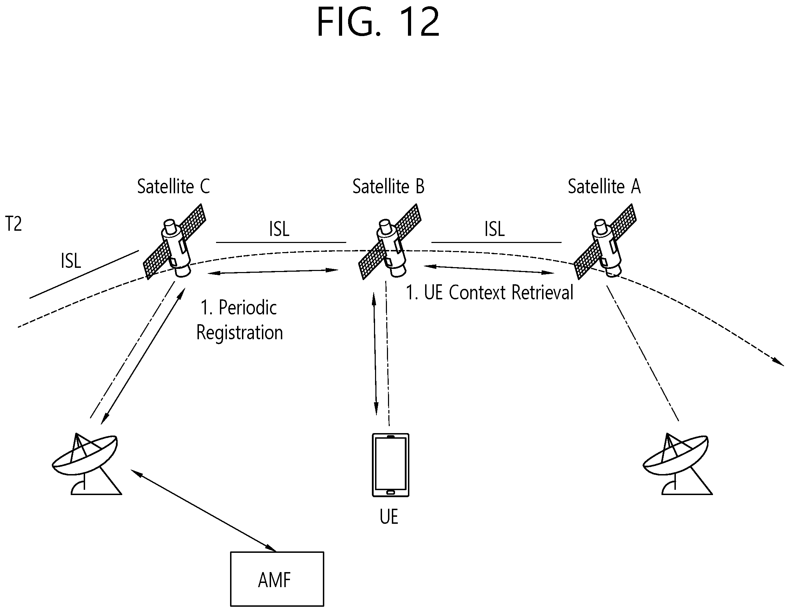

**FIG. 12** **illustrates an example of a situation at time T2.**

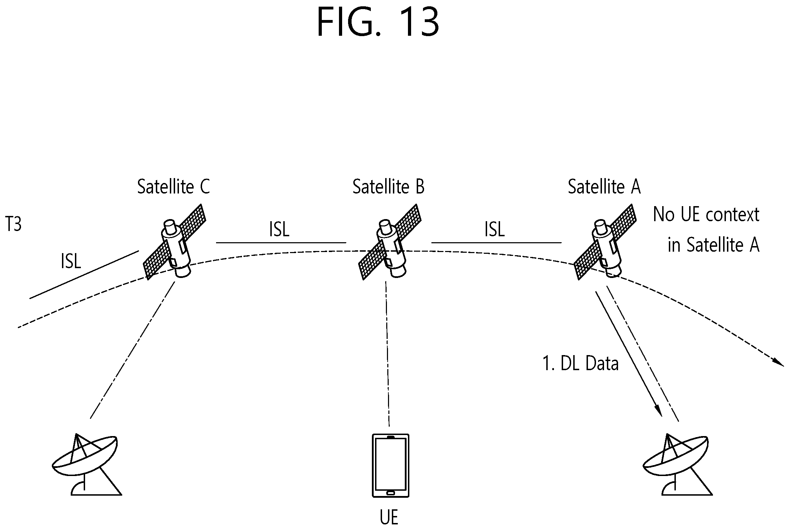

**FIG. 13** **illustrates an example of a situation at time T3.**

An S&F operation using the RRC inactive state may be performed.

For example, the following operations may be performed at time T1:
- The terminal may establish an RRC connection with satellite A through initial registration.
- The terminal may establish a PDU session for data transmission.
- The terminal may transmit uplink MO (Mobile Originated) data.
- If satellite A is configured to buffer data, satellite A may buffer the data until it moves to a transmittable location using a direct feeder link, instead of immediately sending the data to the AMF. Thereafter, the terminal may enter the RRC_INACTIVE state.

For example, the following operations may be performed at time T2:
- The satellite (or the terminal) may move, and the terminal may deviate from the coverage of satellite A.
- The terminal may connect to satellite B and perform Periodic Registration. To this end, the terminal may make an RRC resume request. Based on this, satellite B may retrieve the UE context from satellite A, which was storing the UE context. Then, the terminal may transition to the RRC_CONNECTED state and perform a registration process.
- Satellite B sends a message to delete the UE context through a UE CONTEXT RELEASE message to satellite A according to the existing operation. Then, satellite A deletes the UE context in a state in which it has not yet connected to a terrestrial gateway (base station) and thus has not been able to transmit the uplink data of the terminal. The terminal transitions to the RRC_INACTIVE state. Thereafter, at time T3, satellite A is connected to the terrestrial gateway. Because the UE context has been deleted, satellite A cannot deliver uplink data (e.g., NAS signaling) to the AMF through the terrestrial gateway.

For the S&F operation, satellite A must be able to deliver the uplink data of the terminal to the terrestrial gateway when it is connected to the terrestrial gateway.

In order for the S&F operation in the RRC inactive state of the terminal to be performed, a method is required in which satellite A does not delete the UE context even after transmitting it to satellite B.

The S&F operation may be used in delay-tolerant data communication due to the time delay. Accordingly, since the aforementioned method (the method of not deleting the UE context) is required only for a terminal performing delay-tolerant data communication, distinction from a general terminal is necessary.

In the present specification, a method of managing a UE context of a satellite for a terminal and a network supporting an S&F operation may be proposed.

The method of managing a UE context of a base station for the proposed storage and delivery operation of a satellite may be composed of a combination of one or more of the following operations/configurations/steps.

These procedures and/or messages may use conventional procedures/messages, may use extended conventional procedures/messages, or new procedures/messages may be defined and used.

In the present specification, Store and Forward (S&F) and storage and delivery are used interchangeably.

In the present specification, UE (User Equipment) and terminal are used interchangeably.

The present specification focuses on the proposed content.

In the present specification, a satellite may be a regenerative satellite.

In the present specification, an architecture in which an NG-RAN is mounted on a satellite is assumed.

In the present specification, a connection may mean a logical connection (association) and/or a physical connection.

When a satellite serving a terminal is changed, the terminal may establish an RRC connection with a new satellite through registration. This procedure for establishing an RRC connection may be implemented through an inter satellite link (ISL) between satellites. Depending on the implementation method, a base station may relay a NAS signal by loading an Xn interface on the ISL. Alternatively, an N2 interface may be directly implemented between the satellite and the AMF using the ISL as a transport layer.

Through registration, the core network may receive the UE context of the terminal.

The AMF may set a periodic registration timer based on satellite coverage information for the terminal. Based on this, the terminal may perform registration every time the satellite changes.

In the present specification, it is assumed and described that an inter-satellite Xn interface is implemented through the ISL and each satellite delivers signaling to the AMF through the Xn interface. To this end, it is assumed that each satellite has routing information for delivering signaling to the AMF.

Alternatively, through a multi-hop ISL between the satellite and the AMF, the satellite may directly establish an N2 interface.

It is assumed that there is no mobility of an IoT terminal for the S&F operation. Alternatively, even if the terminal has mobility, it is assumed that the network (e.g., AMF) can know the time when the terminal enters satellite coverage based on information on the mobility of the terminal.

The satellite may have an inter-satellite Xn interface through the ISL. The terminal may perform a registration and establish a PDU session through the ISL. The terminal may transmit data through an S&F mode.

Data transmission in the present specification may be data transmission through a control plane through a Control Plane 5GS CIoT Optimization operation.

When the terminal delivers data through the control plane in the RRC_CONNECTED state, the satellite NG-RAN cannot know whether user data is included in a UL NAS Transport message included in an RRC message, and thus the terminal may include an indication informing whether user data is included in the RRC message.

The satellite may operate in an RRC inactive state (RRC_INACTIVE mode) for a specific terminal. In the case of the RRC inactive state (RRC_INACTIVE mode), the satellite may retrieve a UE context from an NG-RAN holding the UE context of the specific terminal. Then, a transition to the RRC connected state is performed. Thereafter, the terminal and the satellite may transmit and receive data.

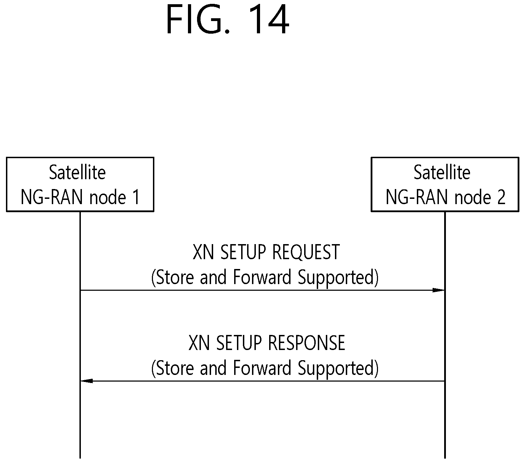

**FIG. 14** **illustrates an example of an Xn setup procedure according to an embodiment of the present specification.**

Base station node 1 may transmit an XN SETUP REQUEST message to base station node 2. Based on this, base station node 2 may transmit an XN SETUP RESPONSE message to base station node 1. At this time, the two satellites may exchange configuration data required for the Xn interface.

When base station node 1 (satellite) supports the S&F operation, base station node 1 may include information on capability to support the S&F operation in the XN SETUP REQUEST message and transmit it to base station node 2.

Similarly, when base station node 2 (satellite) supports the S&F operation, base station node 2 may include information on capability to support the S&F operation in the XN SETUP RESPONSE message and transmit it to base station node 1.

Base station node 1 and base station node 2 may know whether each other supports the S&F operation.

To include the aforementioned capability in the XN SETUP REQUEST (or XN SETUP RESPONSE) message, a new IE may be defined. (e.g., List of Served Cells NR IE > Served Cell Information NR IE > Store and Forward Supported IE)

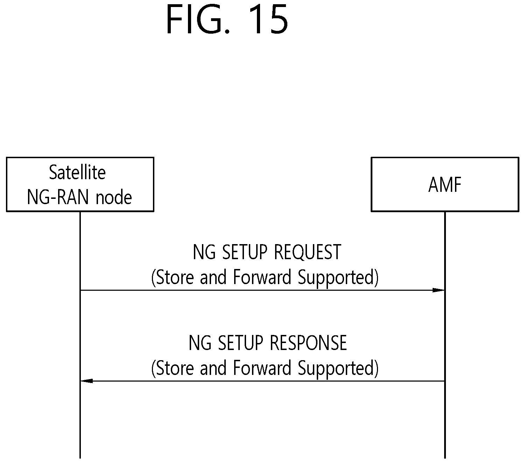

**FIG. 15** **illustrates an example of an NG setup procedure according to an embodiment of the present specification.**

An NG setup process between a satellite (base station) and an AMF may be performed.

The satellite may transmit an NG SETUP REQUEST message to the AMF. Based on this, the AMF may transmit an NG SETUP RESPONSE message to the satellite. Through this process, configuration data required for the NG interface may be exchanged.

When the satellite supports the S&F operation, the satellite may include information on capability to support the S&F operation in the NG SETUP REQUEST message and transmit it to the AMF.

When the AMF supports the S&F operation, the AMF may include information on capability to support the S&F operation in the NG SETUP RESPONSE message and transmit it to the satellite.

The satellite and the AMF may know whether each other supports the S&F operation.

To include the aforementioned capability in the NG SETUP REQUEST (or NG SETUP RESPONSE) message, a new IE may be defined.

When both the satellite and the AMF support the S&F operation, multiple N2 connections between the satellite and the AMF may be created for a terminal supporting the S&F operation.

For example, even if an N2 connection for a specific terminal exists between the satellite and the AMF, an additional N2 connection for the specific terminal may be created between the satellite and the AMF.

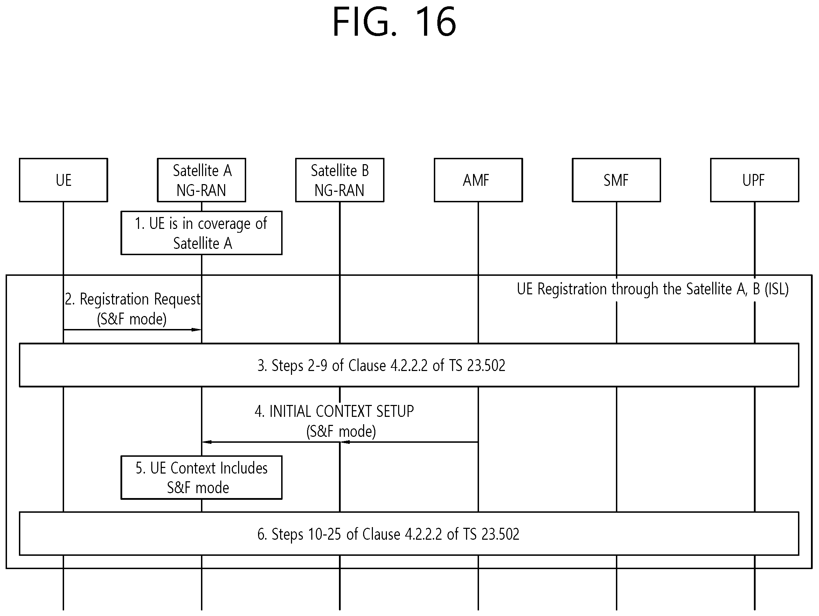

**FIG. 16** **illustrates an example of a registration procedure according to an embodiment of the present specification.**

For a general registration process, 4.2.2.2.2 General Registration of TS 23.502 v18.2.0 or the contents of FIGS. 6-7 may be applied.

According to an embodiment of the present specification, information indicating support for the S&F operation may be transmitted to a base station (satellite). The base station (satellite) may add the aforementioned information to the UE context.

Step 1. A terminal may be within the coverage of satellite A.

The terminal may be connected to a terrestrial network (terrestrial gateway and/or core network) through satellite A.

The terminal may perform registration with the core network through satellite A.

The terminal may be connected to the terrestrial network through an ISL between satellite A and satellite B.

Step 2. The terminal may transmit a registration request message to the AMF through satellite A to register with the network.

The terminal may put information indicating that operation in an S&F mode is possible into 'Core Network MM capability' of the registration request message and transmit it to the AMF through satellite A.

Step 3. Steps 2-9 of 4.2.2.2.2 General Registration of TS 23.502 v18.2.0 (or FIGS. 6 to 7) may be performed.

Step 4. In step 9 of 4.2.2.2.2 General Registration of TS 23.502 v18.2.0 (or FIGS. 6 to 7), the AMF performs an INITIAL CONTEXT SETUP process with the NG-RAN. At this time, the AMF may transmit information indicating that the terminal supports the S&F operation to the NG-RAN (satellite A and satellite B).

Step 5. Satellite A may store information that it is a terminal supporting the S&F operation (operating in the S&F mode) in the UE context. This information is transmitted to a new satellite (or base station) even when the satellite (or base station) is changed.

Step 6. Steps 10-25 of 4.2.2.2.2 General Registration of TS 23.502 v18.2.0 (or FIGS. 6 to 7) may be performed. In step 21, the AMF may include information that it supports the S&F operation in a Registration Accept message and transmit it to the terminal.

In the case of S&F, MO (mobile originated) data (uplink data) may be delivered using the 'UPF anchored Mobile Originated Data Transport in Control Plane CIoT 5GS Optimisation' method of 4.24.1 of TS 23.502 v18.2.0, or may be transmitted through a general user plane.

Data buffering in the present specification may be performed by a satellite base station (NG-RAN).

Satellite A, satellite B, and the AMF may all support the S&F operation.

An embodiment in the case of using Control Plane CIoT 5GS Optimisation is as follows:
- A terminal that has registered with the network and created a PDU session may transmit MO data to satellite B. Here, satellite B may be a satellite without a direct connection to a terrestrial network through a feeder link.
- Satellite B may store the MO data from the terminal.
- Thereafter, when a feeder link between satellite B and the terrestrial network is connected, satellite B may transmit the MO data to the terrestrial network.
- Satellite C may retrieve the UE context for the terminal from satellite B.
- All of satellites A, B, and C may maintain the UE context without deleting it.
- The terminal may transmit MO data by connecting with a changed satellite even if a satellite serving the terminal is changed.

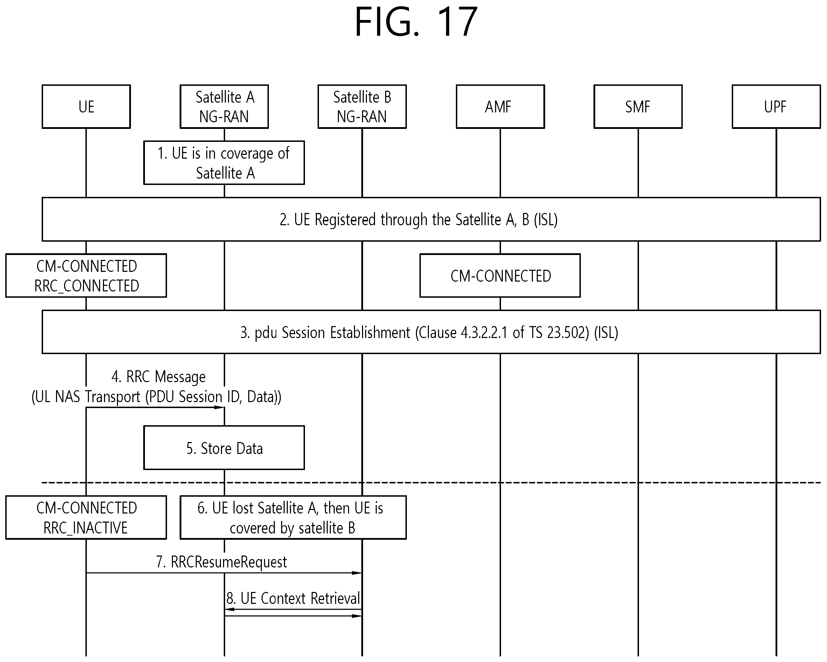

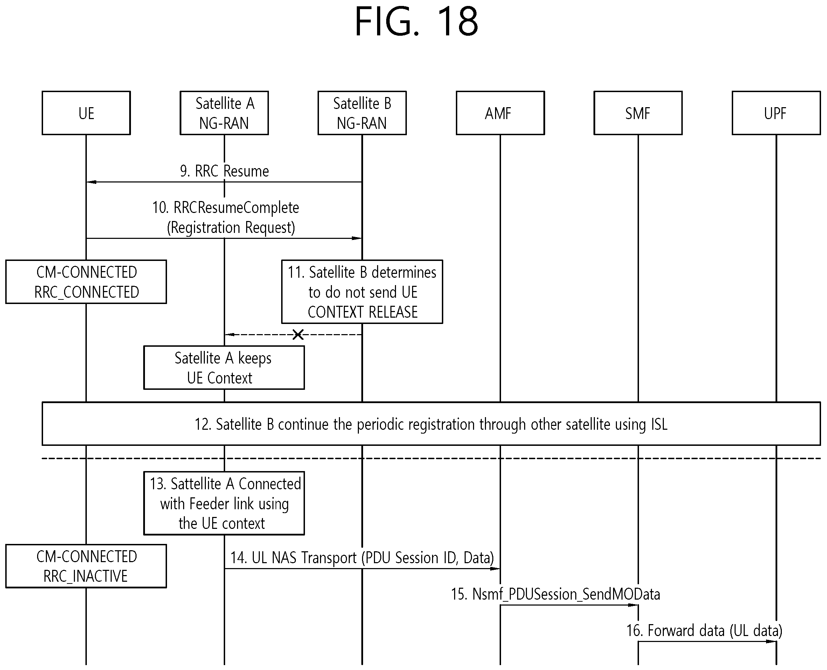

**FIG. 17** **and** **FIG. 18** **illustrate examples of an S&F procedure according to an embodiment of the present specification.**

Steps 1 to 5 to be described later may correspond to T1 of FIG. 11.

Steps 6 to 12 to be described later may correspond to T2 of FIG. 12.

After step 13 to be described later may correspond to T3 of FIG. 13.

Step 1-2. Same as Steps 1-6 of FIG. 16. Thereafter, the terminal may be in a CM-CONNECTED, RRC_CONNECTED state.

Step 3. The terminal may create a PDU session according to the PDU session establishment procedure of 4.3.2.2.1 of TS 23.502 v18.2.0. In this procedure, the AMF may determine to use Control Plane CIoT 5GS Optimisation.

Step 4. If there is MO data of the terminal, the terminal may include a PDU session ID and MO data used for Control Plane CIoT 5GS Optimisation in a NAS message (UL NAS Transport) and deliver it to satellite A.

The terminal may transmit the MO data to satellite A. The MO data may include the PDU session ID.

Step 5. If satellite A currently has no feeder link and the terminal supports the S&F operation, satellite A may store the MO data of the terminal.

Satellite A may confirm whether the terminal supports the S&F operation through the UE context. The fact that the terminal supports the S&F operation may mean that there is no problem even if the terminal performs communication through the S&F operation. For example, this may be a case where the terminal performs delay-tolerant networking.

Step 6. The terminal may transition to an RRC_INACTIVE state.

Based on the absence of data (MO data and/or MT data) for the terminal, the terminal may transition to the RRC_INACTIVE state.

Alternatively, when the terminal no longer belongs to the coverage of satellite A (due to movement of the terminal/satellite), the terminal may transition to the RRC_INACTIVE state.

(By movement of the terminal or satellite A) The satellite serving the terminal may be changed from satellite A to satellite B. For example, (by movement of the terminal or satellite A) the terminal may be located in the coverage of satellite B rather than the coverage of satellite A.

The terminal may be in the RRC connected state in the coverage of satellite A. Thereafter, the terminal may be in the RRC inactive state. Thereafter, the terminal may be in the RRC connected state in the coverage of satellite B.

Step 7. According to a period of Periodic Registration, the terminal may transmit an RRCResumeRequest (9.2.2.4.1 of TS 38.300 v17.5.0) message to satellite A to trigger a registration procedure. Based on this, an RRC resume procedure may be performed.

Step 8. Satellite B may confirm a base station ID (an ID corresponding to satellite A) through I-RNTI information of the UE and retrieve the UE context from satellite A.

Satellite B may retrieve the UE context through the ISL with satellite A.

Satellite B may transmit a RETRIEVE UE CONTEXT REQUEST message to satellite A. Based on this, satellite A may transmit a RETRIEVE UE CONTEXT RESPONSE message to satellite B.

The RETRIEVE UE CONTEXT RESPONSE message may include the UE context. The UE context may include information that the terminal supports the S&F operation.

Step 9. RRC resume is completed, and the terminal may be in the RRC_CONNECTED state.

Satellite B may transmit RRCResume to the terminal. Then, the terminal may be in the RRC_CONNECTED state.

Step 10. The terminal may transmit an RRCResumeComplete message to satellite B.

At this time, the RRCResumeComplete message may include a Registration Request for Periodic Registration of the terminal.

The terminal may be in a CM-CONNECTED, RRC_CONNECTED state.

Step 11. Satellite B may determine not to transmit a UE CONTEXT RELEASE message to satellite A. The determination may be based on the fact that satellite A and the terminal support the S&F operation.

Conventionally, satellite B delivered a UE CONTEXT RELEASE message to satellite A after the RRCResumeComplete procedure. Then, a process of deleting the UE context in satellite A was performed.

Based on the following, satellite B may determine not to transmit the UE CONTEXT RELEASE message to satellite A:
- Based on the acquired UE context information (retrieved from satellite A), satellite B may know the fact that the terminal supports the S&F operation.
- When satellite B and satellite A perform Xn setup (FIG. 14), satellite B may know the fact that satellite A supports the S&F operation.

Based on not receiving the UE CONTEXT RELEASE message from satellite B, satellite A may maintain the UE context and the terminal data being buffered without deleting them.

Step 12. The terminal may perform a Periodic Registration procedure through satellite B.

Through a service link between the terminal and satellite B and a feeder link between satellite B and the terrestrial gateway, the Periodic Registration procedure may be performed.

Through i) the service link between the terminal and satellite B, ii) the ISL between satellite B and another satellite (e.g., satellite C), and iii) a feeder link between the other satellite and the terrestrial gateway, the terminal may perform the Periodic Registration procedure.

The AMF may know that the terminal supports the S&F operation through the UE context (the UE context of the AMF) (through the information that the terminal supports the S&F operation received from the terminal in the registration process of step 2). Based on this, the AMF may determine multiple N2 connections.

For example, the AMF may additionally create an N2 connection with satellite B while maintaining the N2 connection with satellite A.

Step 13. Satellite A may determine to transmit the buffered data through the feeder link when connected to the terrestrial network.

When satellite A is capable of connecting with the terrestrial gateway, satellite A may connect with the core network (e.g., AMF) through the terrestrial gateway (feeder link) using the UE context. For example, satellite A may connect with the AMF using the maintained N2 connection (e.g., without having to perform an NG setup procedure).

Satellite A may connect to the AMF of the UE using the maintained UE context.

Step 14. Satellite A may deliver the NAS message (UL NAS Transport) received from the terminal to the AMF. The NAS message may include the MO data and PDU session ID of the terminal in step 4.

Using the N2 connection maintained in step 12 (e.g., without having to perform an NG setup procedure) and the UE context, satellite A may transmit the buffered data to the AMF through the feeder link when connected to the terrestrial network. The buffered data may include the PDU session ID.

Step 15. The AMF may determine an SMF handling the PDU session based on the PDU session ID included in the NAS message. Based on this, the AMF may deliver the PDU session ID and data to the determined SMF through an Nsmf_PDUSession_SendMOData service operation.

Step 16. The SMF may deliver, to the UPF, the data received from the AMF.

Even if there is no uplink data (MO data) or downlink data (MT data) in the satellite, the satellite may maintain its UE context without deleting it. The maintained UE context may be used when the corresponding satellite serves the terminal again (e.g., when it serves the terminal again after orbiting).

The UE context may be deleted after a certain time by a timer. The timer may be set by a terminal, a satellite, a base station, or a core network.

If Control Plane CIoT 5GS Optimisation is not used, in step 4 of FIG. 17, instead of the terminal transmitting user data through a NAS message (UL NAS Transport) including a PDU session ID and data, the terminal may transmit MO data to satellite A through a user plane. Satellite A may store the MO data.

In this case, after step 10 of FIG. 17, satellite B may transmit a Path Switch Request message to the AMF. Satellite B may include an indication that it supports the S&F operation in the Path Switch Request.

Based on the indication and/or the fact that the terminal supports the S&F operation, the AMF may maintain the N2 connection with satellite A for the terminal without deleting it.

Thereafter, satellite A may connect with the terrestrial gateway (feeder link) (step 13 of FIG. 17). Then, satellite A may connect with the AMF using the maintained N2 connection (e.g., without having to perform an NG setup procedure) and the UE context. Satellite A may transmit a Path Switch Request message to the AMF. Then, satellite A may create a user plane resource with the UPF through the SMF and forward the stored MO data to the UPF.

A satellite (a satellite equipped with a base station function) may receive information indicating that a terminal supports an S&F operation from an AMF during a registration process and store it in a UE context. When a satellite serving the terminal is changed, the UE context including the corresponding information may be delivered to the changed serving satellite (the satellite currently serving the terminal). The changed serving satellite may not transmit a UE context release message to the serving satellite before the change based on the UE context. Accordingly, the serving satellite before the change does not delete the UE context and may thereafter connect to the AMF of the terminal using the UE context when connected to a terrestrial gateway. Based on this, the serving satellite before the change may forward buffered MO data to the AMF.

The S&F operation may be supported in the RRC inactive state (RRC_INACTIVE mode).

The operations proposed in the present specification may be applied by an AMF and an NG-RAN mounted on a satellite for a terminal performing an S&F operation of the satellite.

An NG-RAN may be mounted on the satellite. There may be no mobility of a terminal supporting the S&F operation. Alternatively, even if the terminal has mobility, a network (e.g., AMF) can know a time when the terminal enters satellite coverage based on information on the mobility of the terminal.

Satellites can perform inter-satellite Xn interface communication through ISL. Signaling messages, such as the terminal registering with the network or creating a PDU session, may be transmitted to a gateway (base station) through ISL. Data transmission of the terminal may be operated through S&F.

The proposed operation may be used even when a general user plane is used, and may also be used when data is transmitted as a NAS message through 'Control Plane CIoT 5GS Optimisation'. The terminal may include an indication informing whether user data is included in an RRC message.

The satellite may be a LEO or MEO satellite.
1) Satellites may know whether they support the S&F operation by exchanging capability information regarding support for the S&F operation during an Xn setup process. Satellites may know whether they support the S&F operation by exchanging capability information regarding support for the S&F operation during an NG setup process between AMFs. When both the satellites and the AMF support the corresponding function, multiple N2 connections between the AMF and the satellite base station may be created and maintained for one UE supporting the S&F function.
2) In the process of registering with the network, the terminal informs that it is a terminal capable of supporting the S&F operation, and the AMF of the satellite also accepts the S&F operation. When creating an Initial Context with the satellite NG-RAN, the AMF may provide an indication in the UE context indicating that the UE operates in S&F or may include that the UE operates in S&F in the UE context. The RAN may store that the UE operates in the S&F mode in the UE context. This information may be transmitted to a new satellite (or base station) even when the satellite (or base station) is changed.
3) If there is no data to be transmitted, the terminal transitions to an RRC_INACTIVE state, and the satellite NG-RAN may maintain the UE context of the terminal.
4) When the satellite moves and the satellite covering the terminal is changed so that the terminal performs an RRC resume process, the new satellite NG-RAN may retrieve the UE context from the satellite that previously held the UE context of the terminal. The new satellite may confirm that the corresponding UE is a UE supporting the S&F function from the UE context in a RETRIEVE UE CONTEXT RESPONSE message. The new satellite may confirm that it is a satellite supporting the S&F operation during an Xn setup process with the satellite that delivered the UE context. Based on the fact that the existing satellite and the UE support the S&F operation, the new satellite may determine not to deliver a UE CONTEXT RELEASE message to the existing satellite.
5) When the satellite serving the terminal is changed, even if the satellite before the change delivers the UE context to the changed satellite, the satellite before the change may continuously maintain the UE context. Based on this, when the satellite before the change is connected to a terrestrial gateway, it may connect to the AMF of the UE using the stored UE context. And, if the satellite before the change was storing MO data of the UE, it may transmit the MO data of the UE to the AMF of the UE.

The following drawings were created to explain specific examples of the present specification. Since the specific names of devices or specific names of signals/messages/fields described in the drawings are presented as examples, the technical features of the present specification are not limited to the specific names used in the following drawings.

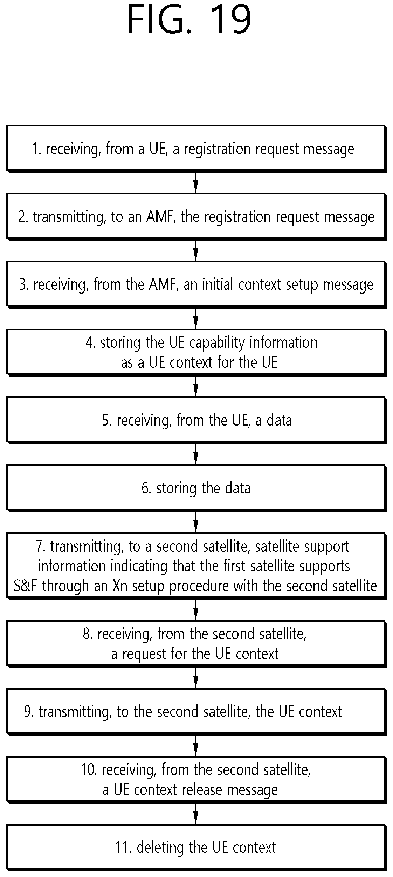

**FIG. 19** **shows the procedure of the first satellite according to disclosure of the present specification.**
1. The first satellite may receive, from a user equipment (UE), a registration request message.
   The registration request message may include UE capability information indicating that the UE supports store and forward (S&F).
2. The first satellite may transmit, to an access and mobility management function (AMF), the registration request message.
3. The first satellite may receive, from the AMF, an initial context setup message.
   The initial context setup message may include the UE capability information.
4. The first satellite may store the UE capability information as a UE context for the UE, based on the initial context setup message.
5. The first satellite may receive, from the UE, a data.
6. The first satellite may store the data, based on i) the first satellite having no connection with a terrestrial gateway and ii) the UE capability information.
7. The first satellite may transmit, to a second satellite, satellite support information indicating that the first satellite supports S&F through an Xn setup procedure with the second satellite.
8. The first satellite may receive, from the second satellite, a request for the UE context, based on a change of a satellite serving the UE from the first satellite to the second satellite.
9. The first satellite may transmit, to the second satellite, the UE context, based on the request.
10. The first satellite may receive, from the second satellite, a UE context release message, based on transmitting the UE context.
11. The first satellite may delete the UE context, based on the UE context release message.

The first satellite may skip receiving the UE context release message and deleting the UE context, based on i) transmitting the satellite support information and ii) the UE capability information.

The first satellite may connect to a specific terrestrial gateway.

The first satellite may transmite, to the AMF, the data through the specific terrestrial gateway using the UE context, based on skipping the deleting of the UE context.

The first satellite may perform a procedure for establishing a PDU session with the UE and the AMF.

The data may be related to the PDU session.

The data may include an ID of the PDU session.

The first satellite may be a regenerative satellite.

The following drawings were created to explain specific examples of the present specification. Since the specific names of devices or specific names of signals/messages/fields described in the drawings are presented as examples, the technical features of the present specification are not limited to the specific names used in the following drawings.

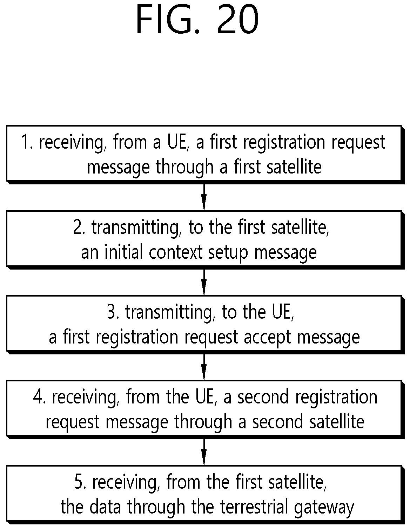

**FIG. 20** **shows the procedure of the AMF according to disclosure of the present specification.**
1. The AMF may receive, from a UE, a first registration request message through a first satellite.
   The registration request message may include UE capability information indicating that the UE supports S&F.
2. The AMF may transmit, to the first satellite, an initial context setup message.
   The initial context setup message may include the UE capability information.
3. The AMF may transmit, to the UE, a first registration request accept message, based on the first registration request message.
   The first registration request accept message may include information indicating that the AMF supports S&F.
4. The AMF may receive, from the UE, a second registration request message through a second satellite, based on a change of a satellite serving the UE from the first satellite to the second satellite.
5. The AMF may receive, from the first satellite, the data through the terrestrial gateway, based on i) the first satellite supporting S&F, ii) the first satellite being connected to a terrestrial gateway, iii) the first satellite having received and stored the data from the UE before the change, and iv) the UE capability information.

The AMF may perform a procedure for establishing a PDU session with the UE and the first satellite;

The data may be related to the PDU session.

The data may include an ID of the PDU session.

The AMF may transmit, to an SMF, the data, based on the ID of the PDU session.

The first satellite may be a regenerative satellite.

The following drawings were created to explain specific examples of the present specification. Since the specific names of devices or specific names of signals/messages/fields described in the drawings are presented as examples, the technical features of the present specification are not limited to the specific names used in the following drawings.

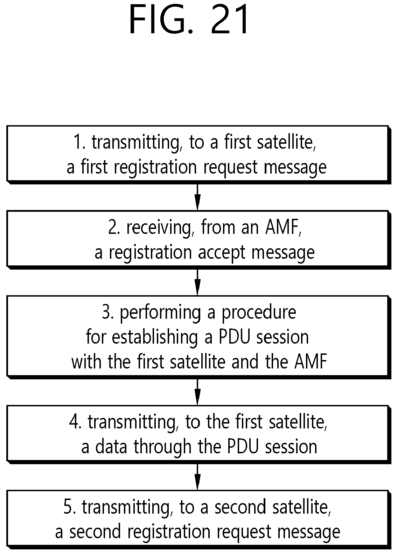

**FIG. 21** **shows the procedure of the UE according to disclosure of the present specification.**
1. The UE may transmit, to a first satellite, a first registration request message.
   The first satellite may have no connection with a terrestrial gateway.
   The registration request message may include UE capability information indicating that the UE supports S&F,
2. The UE may receive, from an AMF, a registration accept message.
3. The UE may perform a procedure for establishing a PDU session with the first satellite and the AMF.
4. The UE may transmit, to the first satellite, a data through the PDU session; and
   transmitting, to a second satellite, a second registration request message, based on a change of a satellite serving the UE from the first satellite to the second satellite.

The first satellite may be a regenerative satellite.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: transmitting, to a first satellite, a first registration request message;

wherein the first satellite has no connection with a terrestrial gateway, wherein the registration request message includes UE capability information indicating that the UE supports S&F, receiving, from an AMF, a registration accept message; performing a procedure for establishing a PDU session with the first satellite and the AMF; transmitting, to the first satellite, a data through the PDU session; and transmitting, to a second satellite, a second registration request message, based on a change of a satellite serving the UE from the first satellite to the second satellite.

Hereinafter, a processor for providing communication according to some embodiments of the present specification will be described.

The processor is configured to: The processor may perform: transmitting, to a first satellite, a first registration request message; wherein the first satellite has no connection with a terrestrial gateway, wherein the registration request message includes UE capability information indicating that the UE supports S&F, receiving, from an AMF, a registration accept message; performing a procedure for establishing a PDU session with the first satellite and the AMF; transmitting, to the first satellite, a data through the PDU session; and transmitting, to a second satellite, a second registration request message, based on a change of a satellite serving the UE from the first satellite to the second satellite.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to a first satellite, a first registration request message;

wherein the first satellite has no connection with a terrestrial gateway, wherein the registration request message includes UE capability information indicating that the UE supports S&F, receiving, from an AMF, a registration accept message; performing a procedure for establishing a PDU session with the first satellite and the AMF; transmitting, to the first satellite, a data through the PDU session; and transmitting, to a second satellite, a second registration request message, based on a change of a satellite serving the UE from the first satellite to the second satellite.

The present specification may have various effects.

For example, S&F operations can be performed when the serving satellite changes.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication by a first satellite, comprising:
receiving, from a user equipment (UE), a registration request message;
wherein the registration request message includes UE capability information indicating that the UE supports store and forward (S&F),
transmitting, to an access and mobility management function (AMF), the registration request message;
receiving, from the AMF, an initial context setup message;
wherein the initial context setup message includes the UE capability information,
storing the UE capability information as a UE context for the UE, based on the initial context setup message;
receiving, from the UE, a data;
storing the data, based on i) the first satellite having no connection with a terrestrial gateway and ii) the UE capability information;
transmitting, to a second satellite, satellite support information indicating that the first satellite supports S&F through an Xn setup procedure with the second satellite;
receiving, from the second satellite, a request for the UE context, based on a change of a satellite serving the UE from the first satellite to the second satellite;
transmitting, to the second satellite, the UE context, based on the request;
receiving, from the second satellite, a UE context release message, based on transmitting the UE context; and
deleting the UE context, based on the UE context release message,
wherein the first satellite skips receiving the UE context release message and deleting the UE context, based on i) transmitting the satellite support information and ii) the UE capability information.

2. The method of claim 1, further comprising:
connecting to a specific terrestrial gateway; and
transmitting, to the AMF, the data through the specific terrestrial gateway using the UE context, based on skipping the deleting of the UE context.

3. The method of claim 2, further comprising:
performing a procedure for establishing a PDU session with the UE and the AMF,
wherein the data is related to the PDU session, and
wherein the data includes an ID of the PDU session.

4. The method of any one of claims 1 to 3,
wherein the first satellite is a regenerative satellite.

5. A method for performing communication by an AMF, comprising:
receiving, from a UE, a first registration request message through a first satellite;
wherein the registration request message includes UE capability information indicating that the UE supports S&F, transmitting, to the first satellite, an initial context setup message;
wherein the initial context setup message includes the UE capability information,
transmitting, to the UE, a first registration request accept message, based on the first registration request message;
wherein the first registration request accept message includes information indicating that the AMF supports S&F,
receiving, from the UE, a second registration request message through a second satellite, based on a change of a satellite serving the UE from the first satellite to the second satellite; and
receiving, from the first satellite, the data through the terrestrial gateway, based on i) the first satellite supporting S&F, ii) the first satellite being connected to a terrestrial gateway, iii) the first satellite having received and stored the data from the UE before the change, and iv) the UE capability information.

6. The method of claim 5, further comprising:
performing a procedure for establishing a PDU session with the UE and the first satellite;
wherein the data is related to the PDU session,
wherein the data includes an ID of the PDU session, and
transmitting, to an SMF, the data, based on the ID of the PDU session.

7. The method of claim 5 or claim 6,
wherein the first satellite is a regenerative satellite.

8. A method for performing communication by a UE, comprising:
transmitting, to a first satellite, a first registration request message;
wherein the first satellite has no connection with a terrestrial gateway,
wherein the registration request message includes UE capability information indicating that the UE supports S&F, receiving, from an AMF, a registration accept message;
performing a procedure for establishing a PDU session with the first satellite and the AMF;
transmitting, to the first satellite, a data through the PDU session; and
transmitting, to a second satellite, a second registration request message, based on a change of a satellite serving the UE from the first satellite to the second satellite.

9. The method of claim 8,
wherein the first satellite is a regenerative satellite.

10. A first satellite, to perform communication, comprising:
at least one transceiver; and
at least one processor,
wherein the processor performs operations that is a method of one of the claims 1 to 4.

11. An AMF, to perform communication, comprising:
at least one transceiver; and
at least one processor,
wherein the processor performs operations that is a method of one of the claims 5 to 7.

12. A UE, to perform communication, comprising:
at least one transceiver; and
at least one processor,
wherein the processor performs operation that is a method of claims 8 or 9.
